# EUROPEAN PATENT APPLICATION

(11) **EP 3 564 053 A1**
(43) Date of publication of application: **06.11.2019**
(21) Application number: 17887512.6
(22) Date of filing: 20.12.2017
(51) Int. Cl.: B60G 7/00, B29C 45/14

(54) **HYBRID SUSPENSION ARM FOR VEHICLE AND METHOD FOR MANUFACTURING SAME**

(30) Priority: 28.12.2016 KR 20160181227
(71) Applicant: Iljin Co., Ltd., Gyeongju-si, Gyeongsangbuk-do 38073 (KR)
(72) Inventor: KWON, Tae Sung, Gyeongju-si Gyeongsangbuk-do 38073 (KR); LEE, Sung Keun, Gyeongju-si Gyeongsangbuk-do 38073 (KR); KIM, Hyun Woo, Gyeongju-si Gyeongsangbuk-do 38073 (KR); LEE, Dae Ju, Gyeongju-si Gyeongsangbuk-do 38073 (KR); PARK, Min Kook, Gyeongju-si Gyeongsangbuk-do 38073 (KR); KWON, Soon Chan, Gyeongju-si Gyeongsangbuk-do 38073 (KR)
(74) Representative: RGTH
(86) International application number: PCT/KR2017/015138
(87) International publication number: WO 2018/124609

(57) **Abstract**

The present disclosure provides a hybrid suspension arm for a vehicle, the hybrid suspension arm having the strength required for a vehicle while being lightweight and having excellent durability. The hybrid suspension arm for a vehicle according to one embodiment of the present disclosure comprises: an arm body comprising aluminum; and an insert molding part made of plastic material which is insert-molded on the arm body and coupled thereto.

## Description

### [Technical Field]

The present disclosure relates to a suspension arm of a vehicle suspension system. More particularly, the present disclosure relates to a hybrid suspension arm for a vehicle, which is formed of composite material, and a manufacturing method therefor.

### [Background Art]

In order to achieve weight reduction in suspension arm, a suspension arm formed of composite material of metal and plastic (hereinafter, referred to as a hybrid suspension arm) has been proposed. For example, the hybrid suspension arm may be formed such that an arm body made of steel material is manufactured by a pressing process and a bending process and then plastic material is coupled to an inner side of the arm body.

However, such a hybrid suspension arm has a disadvantage in that a weight of the arm body is still heavy due to a characteristic of steel material since the arm body is formed of steel material, and it is difficult to make a plate of steel material in a predetermined shape through a pressing process and a bending process.

Further, the arm body formed by the pressing process and the bending process has a large manufacturing tolerance so that the arm body may not be precisely matched with a mold (for following plastic insert molding process). Consequently, a portion in which a plastic insert molding part is not formed may occur or a burr may be formed. In addition, there is a problem that a coating of the portion in which the arm body is in contact with the mold is delaminated and the portion is corroded later due to rainwater and the like.

Further, when cooling is performed after plastic insert molding, an insert molding made of plastic material, which has a shrinkage rate that is larger than that of steel, shrinks more than the arm body, as a result a gap occurs between the arm body and the plastic insert molding and overall strength of the arm body can be degraded.

Further, when rainwater or the like penetrates into the gap to be collected therein, the arm body may be corroded and durability of the suspension arm may be degraded.

### [Disclosure]

### [Technical Problem]

The present disclosure is directed to providing a hybrid suspension arm for a vehicle, which solves the above-described problems, is lighter, satisfies strength required for a vehicle, and has excellent durability.

### [Technical Solution]

A hybrid suspension arm for a vehicle according to one embodiment of the present disclosure comprises an arm body comprising aluminum, and an insert molding part made of plastic material, which is insert-molded on the arm body and coupled thereto.

The arm body may be formed in a truss structure.

When viewed from a cross section perpendicular to a longitudinal direction of the suspension arm, the arm body may be surrounded by the insert molding part.

The arm body may comprise curved portion and straight portion, and a thickness of at least a portion of the curved portion may be formed to be greater than a thickness of the straight portion.

A ball joint coupling part may be integrally formed on at least one end portion of the arm body.

A bush coupling part may be integrally formed on at least one end portion of the arm body.

A surface treatment may be performed on the arm body to form a plurality of irregularities thereon.

When viewed from a top of the arm body, the irregularities may be formed of a plurality of holes having an average diameter in a range of 1µm to 100µm.

The arm body may be formed of aluminum, and the insert molding part of plastic material may be formed of nylon-based resin.

The arm body may be formed in a structure comprising a plurality of outer frames for forming the arm body, circular frame disposed inside the outer frame, and at least one straight frame for connecting between the outer frames and between the outer frame and the circular frame, so as to have the truss structure.

A thickness of the portion in which at least two among the outer frame, the circular frame, and the straight frame of the arm body are connected may be formed to be greater than a thickness of the straight frame.

A method of manufacturing a suspension arm for a vehicle according to one embodiment of the present disclosure may comprise preparing an arm body comprising aluminum, placing the arm body on a mold, and forming an insert molding part coupled to the arm body by inserting-molding plastic material into the mold.

A surface treatment may be performed on the arm body to form a plurality of irregularities thereon.

The method may further comprise machining the portion of the arm body, which is brought into contact with the mold, so as to match a dimension of the portion of the arm body to that of the mold.

The arm body may be formed by casting or die casting.

### [Advantageous Effects]

In accordance with one embodiment of the present disclosure, when compared with a conventional suspension arm made of steel material, an overall weight of a suspension arm can be reduced to achieve weight reduction. Consequently, it is possible to reduce a weight of a vehicle and improve fuel efficiency.

Further, when plastic insert molding is performed, matching between an arm body and a mold can be improved such that it is possible to prevent occurrence of the portion in which a plastic insert molding part is not formed, or occurrence of a burr.

Further, unlike a conventional suspension arm, since a gap does not occur between the arm body and a plastic insert molding, it is possible to prevent corrosion of the arm body due to penetration of rainwater or the like through the gap.

### [Description of Drawings]

The following drawings, which are incorporated herein by reference, illustrate exemplary embodiments of the present disclosure and serve to provide a further understanding of the technical idea of the present disclosure together with the detailed description of the present disclosure. Accordingly, it should be construed that the present disclosure is not limited to features illustrated in the drawings.
FIG. 1 is a perspective view illustrating a suspension arm for a vehicle according to one embodiment of the present disclosure.
FIG. 2 is a plan view illustrating only an arm body in the suspension arm for a vehicle shown in FIG. 1.
FIG. 3 is a cross-sectional view taken along line A-A of FIG. 2.
FIG. 4 is a plan view illustrating the suspension arm for a vehicle shown in FIG. 1.
FIG. 5 is a cross-sectional view taken along line C-C of FIG. 4.
FIG. 6 is an enlarged view illustrating a coupling portion of the arm body and a plastic insert molding part according to one embodiment of the present disclosure.
FIG. 7 is a flowchart illustrating a method of manufacturing a suspension arm for a vehicle according to one embodiment of the present disclosure.
FIG. 8 is a flowchart illustrating a method of manufacturing a suspension arm for a vehicle according to another embodiment of the present disclosure.
FIG. 9 is a flowchart illustrating a method of manufacturing a suspension arm for a vehicle according to still another embodiment of the present disclosure.

### [Modes of the Invention]

Embodiments of the present disclosure are exemplified for the purpose of describing the technical spirit of the present disclosure. The scope of the claims according to the present disclosure is not limited to the embodiments described below or to the detailed descriptions of these embodiments.

Unless otherwise defined, all technical and scientific terms used herein have the same meaning commonly understood by those skilled in the art to which the present disclosure pertains. All terms used herein are selected for the purpose of more clearly describing the present disclosure and not limiting the scope of the present disclosure defined by appended claims.

Unless the phrase or sentence clearly indicates otherwise, terms "comprising," "including," " having," "taking," and the like used herein should be construed as openended terms encompassing the possibility of including other embodiments.

The singular form described herein may include the plural form unless the context clearly dictates otherwise, and this is equally applied to the singular form set forth in the claims.

Terms a "first," a "second," and the like are used to distinguish a plurality of components, and the order or importance of corresponding components is not limited by these terms.

Hereinafter, exemplary embodiments of the present disclosure will be described with reference to the accompanying drawings. In the accompanying drawings, the same reference numerals are assigned to the same or corresponding components. Further, in the following description of the embodiments, a duplicate description of the same or corresponding components may be omitted. However, even though a description of a component is omitted, such a component is not intended to be excluded in any embodiment. Further, exemplary embodiments of a hybrid suspension arm for a vehicle, which will be described below, may be used as an upper control arm or a lower control arm in a vehicle suspension system.

Further, in a suspension arm for a vehicle according to the present disclosure and a manufacturing method therefor, the following description is made with respect to examples of a lower control arm, but the present disclosure is not limited thereto, and this description is also applicable to an upper control arm.

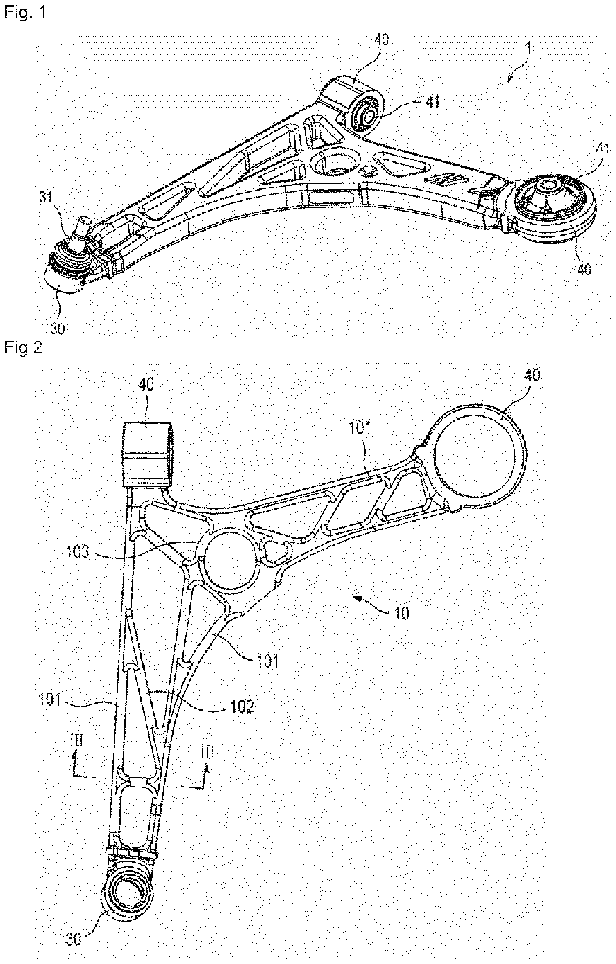

FIG. 1 is a perspective view illustrating a suspension arm 1 for a vehicle according to one embodiment of the present disclosure, and FIG. 2 is a plan view illustrating an arm body 10 constituting the suspension arm 1.

For example, the arm body 10 may have a "λ" shape. The arm body 10 may be manufactured by casting or die casting a material comprising aluminum.

The arm body 10 may have a truss structure. The truss structure defined herein means a structure formed of a plurality of straight bars and/or curved bars.

Referring to FIG. 2, when viewed from a top of the suspension arm for a vehicle, the truss structure of the arm body 10 may comprises a structure comprising at least one outer frame 101 forming the arm body 10, at least one circular frame 103 disposed inside the outer frame, at least one straight frame 102 connecting between the outer frames 101 and between the outer frame 101 and the circular frame 103.

As the arm body 10 according to the present disclosure is manufactured using aluminum through casting or die casting, it is possible to manufacture the arm body 10 in a truss structure which is difficult to be formed by conventional press forming process. Consequently, when compared with a conventional "⊏"-shaped steel arm body, it is possible for the arm body 10 to obtain required strength while reducing a weight thereof.

Further, the strength of the arm body 10 according to the present disclosure may be further improved due to a configuration which will be described below.

For example, a thickness of the portion in which at least two among the outer frames 101, the circular frame 103, and the straight frames 102 of the arm body 10 are connected may be formed to be greater than a thickness of the straight frame. Further, the outer frame 101 may include curved portion and straight portion, and the circular frame 103 is curved. According to the present embodiment, a thickness of at least a portion of the curved portion is formed to be greater than a thickness of the straight portion such that a portion vulnerable to buckling deformation may be complemented and rigidity may be increased.

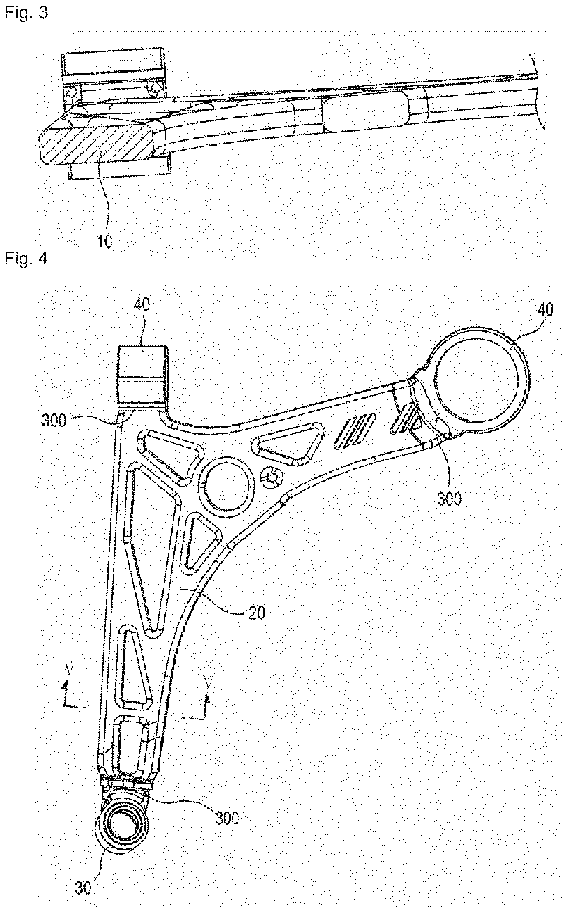

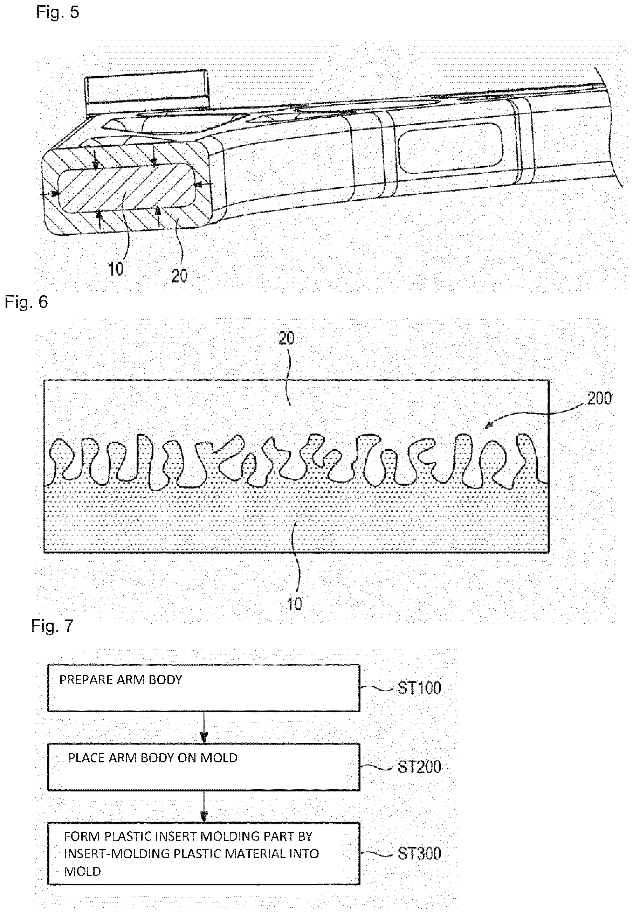

Further, as shown in FIGS. 4 and 5, in order to enhance strength without significantly increasing a weight, the suspension arm 1 may comprise an insert molding part 20 made of plastic material, which is insert-molded on an outer side of the arm body 10 and coupled thereon. In one embodiment of the present disclosure, the plastic insert molding part 20 is formed of fiber-reinforced plastic material. Specifically, the plastic insert molding part 20 may be formed of polyamide resin such as nylon 6 (PA6), nylon 66 (PA66), or the like, or polyamide resin in which glass fiber is contained in nylon 6, nylon 66, or the like.

FIG. 4 is a plan view illustrating the suspension arm for a vehicle shown in FIG. 1, and FIG. 5 is a cross-sectional view taken along line C-C of FIG. 4.

As shown in FIG. 5, the plastic insert molding part 20 may be formed to surround the arm body 10. Since plastic material has a shrinkage rate that is greater than that of steel material, in the conventional case, when cooling is performed after insert molding, a plastic insert molding part coupled to an inner side of an arm body made of steel material shrinks more than the arm body and is separated from the arm body. Consequently, there is a problem in the conventional suspension arm that the plastic insert molding part cannot be firmly coupled to the arm body such and overall strength of the suspension arm is degraded. In the suspension arm according to one embodiment of the present disclosure, since the plastic insert molding part 20 surrounds the arm body 10, when cooling is performed after insert molding, the plastic insert molding part 20 shrinks toward the arm body 10 disposed therein in an arrow direction shown in FIG. 5. Therefore, a gap does not occur in a portion 200 between the arm body 10 and the plastic insert molding part 20, and the plastic insert molding part 20 is firmly coupled to the arm body 10.

Further, as shown in FIG. 6 (which is an enlarged view of a coupling portion of the arm body and the plastic insert molding part), a surface treatment may be performed on the arm body 10 to form a plurality of irregularities thereon. When viewed from a top of the arm body 10, the irregularities may be formed of a plurality of holes having an average diameter in a range of 1 µm to 100 µm. The plurality of holes may be formed using anodization coating in which an oxide film is formed on a surface of metal material with oxygen generated by applying electricity in an electrolytic solution, and a desired level of a porous surface may be obtained on a surface of metal material by changing an electrolytic solution and electric conditions (a current density, a voltage, a frequency, and the like). The plurality of irregularities formed on the surface of the suspension arm body 10 increase a coupling area between the arm body 10 and the plastic insert molding part 20, thereby increasing a coupling force therebetween. That is, probability in which a gap occurs between the arm body 10 and the plastic insert molding part 20 is low, and even when a crack occurs in the plastic insert molding part 20, probability in which the plastic insert molding part 20 is separated from the arm body 10 is low.

Furthermore, since the arm body 10 according to one embodiment of the present disclosure is manufactured using aluminum through casting or die casting, when compared with a conventional arm body formed by pressing and bending steel material, matching property between the arm body 10 and a mold (for insert molding) is improved. Consequently, when insert molding is performed, it is prevented that the plastic insert molding part 20 is improperly formed on a portion of the arm body 10 or a burr is formed.

Further, when a gap is formed between the arm body 10 and the plastic insert molding part 20, rainwater and the like may penetrate into the gap and the arm body 10 may be corroded. In the arm body 10 according to one embodiment of the present disclosure, the plastic insert molding part 20 is firmly coupled to the arm body 10 to minimize the gap such that corrosion of the arm body 10 is prevented and durability of the suspension arm 1 is enhanced.

Returning back to FIG. 2, the arm body 10 may comprise three end portions, and a ball joint coupling part 30 may be integrally formed on at least one end portion among the three end portions. Further, a bush coupling part 40 may be integrally formed on at least one end portion of the arm body 10. As described above, since the arm body 10 may be manufactured using aluminum through casting or die casting, the ball joint coupling part 30 and the bush coupling part 40 may be integrally formed through a single casting or die casting process. That is, since it is not necessary to form a separate ball joint coupling part and a separate bush coupling part and then weld the ball joint coupling part and the bush coupling part to the arm body, a manufacturing process may be simplified.

A ball joint 31 may be coupled to the ball joint coupling part 30, and the ball joint 31 may be coupled to a vehicle wheel. Further, a bush 41 may be coupled to the bush coupling part 40, and the bush may be engaged with a vehicle body through a bolt or the like.

The plastic insert molding part 20 may not be formed on the ball joint coupling part 30 and the bush coupling part 40. The ball joint coupling part 30 and the bush coupling part 30, which are formed of aluminum material, has excellent corrosion resistance, and thus a separate coating treatment may not be necessarily required.

Next, a method of manufacturing a suspension arm according to one embodiment of the present disclosure will be described with reference to FIG. 7. As shown in FIG. 7, the method of manufacturing a suspension arm according to one embodiment of the present disclosure may comprise preparing an arm body (ST100), placing the arm body on a mold (ST200), and forming a plastic insert molding part by insert-molding plastic material into the mold (ST300).

In the preparing of the arm body 10 (ST100), aluminum material may be formed to correspond to a predetermined shape of the arm body 10 by casting or die casting.

When the preparing of the arm body 10 (ST100) is completed, the placing of the prepared arm body 10 on the mold (ST200) is performed. In operation ST200, in order to fix a position of the arm body 10 in the mold, a portion of the arm body 10 may be brought into contact with the mold to be fixed thereto. For example, the portions which are not covered with the plastic insert molding part 20, i.e., the portion 300 which the outer frame 101 is brought into contact with the ball joint coupling part 30 and the bush coupling part 40 in the arm body 10, may be placed to be brought into direct contact with the mold.

In the forming of the plastic insert molding part by insert molding plastic material into the mold (ST300), heated plastic is injected into the mold so that the plastic insert molding part 20 is formed to surround the arm body 10.

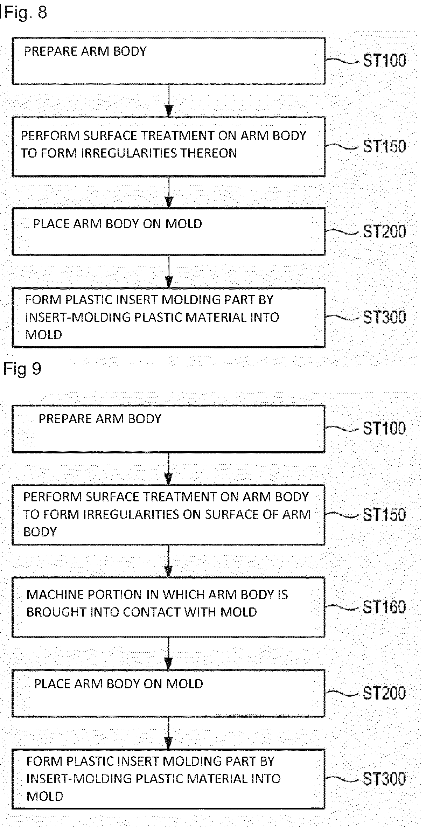

As shown in FIG. 8, according to one embodiment for manufacturing the suspension arm 1 of the present disclosure, before the placing of the arm body 10 on the mold (ST200), a surface treatment may be performed on the arm body 10 to form a plurality of irregularities thereon. For example, holes, each having a size in a range of 1 to 100 µm, are formed on a surface of the arm body 10 such that an area in which the plastic insert molding part 20 is brought into contact with the arm body 10 is increased, and thus the coupling force between different materials may be improved (in the subsequent plastic insert molding process).

As shown in FIG. 9, according to one embodiment for manufacturing the suspension arm 1 of the present disclosure, before the placing of the arm body 10 on the mold (ST200), the manufacturing method may further comprise additionally machining the portion 300 in which the arm body 10 is brought into contact with the mold. In the preparing of the arm body 10, when the portion 300 of the arm body which should be brought into contact with the mold is formed with a tolerance that is larger than a dimension of a corresponding part of the mold, injection molding material leaks from the mold during injection molding process such that a burr occurs or a portion in which the insert molding is not formed occurs. When the matching property between the arm body 10 and the mold is insufficient, the portion 300 of the arm body 10 is machined using a milling machine, a lathe, a numerical control (NC) type machining tool, or the like so as to match the dimension of the portion 300 to the dimension of the corresponding part of the mold. Consequently, the matching property between the arm body 10 and the mold can be enhanced and it is possible to suppress occurrence of the portion in which the insert molding part is not formed or occurrence of a burr.

As described above, although the exemplary embodiments have been described with reference to the accompanying drawings, various alternations and modifications can be derived by those skilled in the art from the above description of the present disclosure. For example, it should be understood that an appropriate result may be achieved even when the techniques described herein may be performed in a different order than the described methods, and/or that components of the described structures, devices, and the like are coupled or combined in a form different from the described methods, or substituted or replaced with other components or equivalents.

## Claims

1. A hybrid suspension arm for a vehicle, comprising:
an arm body comprising aluminum; and
an insert molding part made of plastic material, which is insert-molded on the arm body and coupled thereto.

2. The hybrid suspension arm according to Claim 1, wherein the arm body has a truss structure.

3. The hybrid suspension arm according to Claim 1, wherein, when viewed from a cross section of the suspension arm, the arm body is surrounded by the insert molding part.

4. The hybrid suspension arm according to Claim 1, wherein the arm body comprises curved portion and straight portion, and a thickness of at least a portion of the curved portion is greater than a thickness of the straight portion.

5. The hybrid suspension arm according to Claim 1, wherein a ball joint coupling part is integrally formed on at least one end portion of the arm body.

6. The hybrid suspension arm according to Claim 1, wherein a bush coupling part is integrally formed on at least one end portion of the arm body.

7. The hybrid suspension arm according to Claim 1, wherein a surface treatment is performed on the arm body to form a plurality of irregularities thereon.

8. The hybrid suspension arm according to Claim 2, wherein, when viewed from a top of the arm body 10, the irregularities are formed of a plurality of holes having an average diameter in a range of 1µm to 100µm.

9. The hybrid suspension arm according to Claim 1, wherein the insert molding part made of plastic material is formed of nylon-based resin.

10. The hybrid suspension arm according to Claim 2, wherein the arm body comprise at least one outer frame for forming the arm body, at least one circular frame disposed inside the outer frame, and at least one straight frame for connecting between the outer frames and between the outer frame and the circular frame, so as to have the truss structure.

11. The hybrid suspension arm according to Claim 10, wherein a thickness of the portion in which at least two among the outer frame, the circular frame, and the straight frame are connected is greater than a thickness of the straight frame.

12. A method of manufacturing a hybrid suspension arm for a vehicle, the method comprising:
preparing an arm body comprising aluminum;
placing the arm body on a mold; and
forming an insert molding part coupled to the arm body by insert-molding plastic material into the mold.

13. The method according to Claim 12, further comprising:
performing a surface treatment on the arm body to form a plurality of irregularities thereon.

14. The method according to Claim 12, further comprising;
machining the portion of the arm body, which is brought into contact with the mold, so as to match a dimension of the portion of the arm body to that of the mold.

15. The method according to Claim 12, wherein the preparing of the arm body comprises forming the arm body by casting or die casting.
